# EUROPEAN PATENT APPLICATION

(11) **EP 4 460 148 A1**
(43) Date of publication of application: **06.11.2024**
(21) Application number: 21969857.8
(22) Date of filing: 31.12.2021
(51) Int. Cl.: H04W 76/27

(54) **GNSS EFFECTIVENESS PROCESSING METHOD AND APPARATUS, DEVICE AND STORAGE MEDIUM**

(71) Applicant: Beijing Xiaomi Mobile Software Co., Ltd., Beijing 100085 (CN)
(72) Inventor: JIANG, Xiaowei, Beijing 100085 (CN)
(74) Representative: König, Andreas Rudolf
(86) International application number: PCT/CN2021/144061
(87) International publication number: WO 2023/123514

(57) **Abstract**

The present disclosure relates to the technical field of communication. Disclosed are a global navigation satellite system (GNSS) effectiveness processing method and apparatus, a device and a storage medium. The method is executed by a terminal device. The method comprises: when timeout occurs in a GNSS of the terminal device, setting a target parameter of a radio link failure (RLF). According to the method, a solution for the effectiveness of the GNSS can be provided.

## Description

### TECHNICAL FIELD

The present disclosure relates to a field of communication technologies, and in particular relates to a method, an apparatus, and a device for processing GNSS validity, and storage medium.

### BACKGROUND

A GNSS position fix obtained by a terminal device has a validity duration, and validity of the GNSS position fix can only be maintained for a period of time. After the validity duration is exceeded, the GNSS of the terminal device is outdated. The terminal device needs to re-obtain the GNSS.

However, some internet of things (IoT) terminal devices cannot support global navigation satellite system (GNSS) reception and long term evolution (LTE) transmission and reception at the same time.

How to deal with the GNSS validity in the above scenario is an urgent problem to be solved.

### SUMMARY

Embodiments of the present disclosure provide a method, an apparatus, and a device for processing GNSS validity, and storage medium, which can provide a solution for the GNSS validity. The technical solution is as follows.

According to an aspect of the embodiments of the present disclosure, there is provided a method for processing GNSS validity. The method is performed by a terminal device, and the method includes:
setting a target parameter of radio link failure (RLF), in a case that a global navigation satellite system (GNSS) of the terminal device is outdated.

According to an aspect of the embodiments of the present disclosure, there is provided a method for processing GNSS validity. The method is executed by a terminal device, and the method includes:
sending a global navigation satellite system (GNSS) validity duration to a network device.

According to an aspect of the embodiments of the present disclosure, there is provided an apparatus for processing GNSS validity. The apparatus is used to implement a terminal device, and the apparatus includes:
a setting module, configured to set a target parameter of radio link failure (RLF) in a case that a global navigation satellite system (GNSS) of the terminal device is outdated.

According to an aspect of the embodiments of the present disclosure, there is provided an apparatus for processing GNSS validity. The apparatus is used to implement a terminal device, and the apparatus includes:
a second sending module, configured to send a global navigation satellite system (GNSS) validity duration to a network device.

According to an aspect of the embodiments of the present disclosure, there is provided a terminal device. The terminal device includes a processor.

The processor is configured to set a target parameter of radio link failure (RLF) in a case that a global navigation satellite system (GNSS) of the terminal device is outdated.

According to an aspect of the embodiments of the present disclosure, there is provided a terminal device. The terminal device includes a transceiver.

The transceiver is configured to send a global navigation satellite system (GNSS) validity duration to a network device.

According to an aspect of embodiments of the present disclosure, there is provided a computer-readable storage medium. A computer program is stored in the storage medium, and the computer program is used to be executed by a processor, so as to implement the above-mentioned method for processing GNSS validity.

According to an aspect of embodiments of the present disclosure, there is provided a chip. The chip includes a programmable logic circuit and/or program instructions. When the chip is running, it is used to implement the above-mentioned method for processing GNSS validity.

According to an aspect of the embodiments of the present disclosure, there is provided a computer program product or computer program. The computer program product or computer program includes computer instructions, the computer instructions are stored in a computer-readable storage medium. A processor reads the computer instructions from the computer-readable storage medium and executes the computer instructions, to implement the above-mentioned method for processing GNSS validity.

The technical solutions provided by embodiments of the present disclosure can bring the following beneficial effects:

The solutions are provided for the GNSS outdated and the GNSS validity reporting. After the GNSS is outdated, RLF is used to record the relevant information; after obtaining the GNSS validity duration, the GNSS validity duration is reported to the network device, which improves the processing mechanism related to the GNSS validity.

### BRIEF DESCRIPTION OF THE DRAWINGS

In order to more clearly illustrate technical solutions in embodiments of the present disclosure, the drawings that need to be used in the description of the embodiments will be briefly introduced below. Obviously, the drawings in the following description are only some embodiments of the present disclosure. For those skilled in the art, other drawings can also be obtained based on these drawings without creative effort.
Fig. 1 is a schematic diagram of a communication system provided by an exemplary embodiment of the present disclosure.
Fig. 2 is a schematic diagram of a communication system provided by an exemplary embodiment of the present disclosure.
FIG. 3 is a flow chart of a method for processing GNSS validity provided by an exemplary embodiment of the present disclosure.
FIG. 4 is a flow chart of a method for processing GNSS validity provided by an exemplary embodiment of the present disclosure.
FIG. 5 is a flow chart of a method for processing GNSS validity provided by an exemplary embodiment of the present disclosure.
FIG. 6 is a flowchart of a method for processing GNSS validity provided by an exemplary embodiment of the present disclosure.
Fig. 7 is a block diagram of an apparatus for processing GNSS validity provided by an exemplary embodiment of the present disclosure.
Fig. 8 is a block diagram of an apparatus for processing GNSS validity provided by an exemplary embodiment of the present disclosure.
Fig. 9 is a schematic structural diagram of a communication device provided by an exemplary embodiment of the present disclosure.

### DETAILED DESCRIPTION

In order to make the purpose, technical solution and advantages of the present disclosure clearer, implementations of the present disclosure will be further described in detail below in conjunction with the accompanying drawings.

A network architecture and service scene described in the embodiments of the present disclosure are for more clearly illustrating the technical solutions of the embodiments of the present disclosure, and do not constitute limitations on the technical solutions provided by the embodiments of the present disclosure. It can be understood by a person skilled in the art that, with the evolution of the network architecture and the emergence of new service scene, the technical solutions provided by the embodiments of the present disclosure are also applicable to similar technical problems.

Before introducing the technical solutions of the present disclosure, some technical knowledge involved in the present disclosure will be described first.

### Non-Terrestrial Network (NTN) technology

At present, relevant standard organizations are studying NTN technology, which generally uses satellite communication to provide a communication service to a ground user. Compared with a cellular communication network on the ground, the satellite communication has many unique advantages. First of all, satellite communication is not restricted by the user's region. For example, general land communication cannot cover areas such as oceans, mountains, deserts, etc., that cannot be equipped with communication device or are not covered by communication due to sparse population. For the satellite communication, a satellite can cover a large area of the ground, and the satellites can orbit the earth, so theoretically every corner of the earth can be covered by the satellite communication. Secondly, the satellite communication has great social value. The satellite communication can cover, at a lower cost, remote mountainous areas, poor and backward countries or regions, so that people in these regions can enjoy advanced voice communication and mobile internet technology, which is conducive to narrowing the digital gap with developed regions and promoting development of these areas. Thirdly, the distance of the satellite communication is long, and the communication cost does not increase significantly with the increase of the communication distance. Finally, the stability of the satellite communication is high, and it is not limited by natural disasters.

According to orbital altitudes, communication satellites are divided into low-earth orbit (LEO) satellites, medium-earth orbit (MEO) satellites, geostationary earth orbit (GEO) satellites, and high elliptical orbit satellites (HEO), and so on. At present, the main researches are the LEO and GEO.

### 1. LEO

An altitude range of the low-orbit satellites is 500km to 1500km, and corresponding orbital period is about 1.5 hours to 2 hours. A signal propagation delay of single-hop communication between users is generally less than 20ms. A maximum satellite visible time is 20 minutes. A signal propagation distance is short, a link loss is small, and a requirement for transmission power of a user terminal device is not high.

### 2. GEO

The geostationary earth orbit satellites have an orbital height of 35786km and a period of 24 hours for rotating around the earth. The signal propagation delay of the single-hop communication between users is generally 250ms.

In order to ensure satellite coverage and improve system capacity of the entire satellite communication system, the satellite adopts multi-beams to cover the ground. A satellite can form dozens or even hundreds of beams to cover the ground; a satellite beam can cover a ground area of tens to hundreds of kilometers in diameter.

Table 1 shows satellite altitudes, orbits and satellite coverage of a typical NTN network:

**Table 1**

| Platforms | Altitude range | Orbit | Typical beam footprint size |
|---|---|---|---|
| LEO satellite | 300 - 1500 km | Circular around the earth | 100 - 1000 km |
| MEO satellite | 7000 - 25000 km | | 100 - 1000 km |
| GEO satellite | 35 786 km | notional station keeping position fixed in terms of elevation/azimuth with respect to a given earth point | 200 - 3500 km |
| UAS platform (including HAPS) | 8 - 50 km (20 km for HAPS) | | 5 - 200 km |
| HEO satellite | 400 - 50000 km | Elliptical around the earth | 200 - 3500 km |

A round trip time (RTT) from the terminal device to an access network device includes two parts, one part is an RTT of a link from the terminal device to a satellite, which is a UE specific time alignment (TA) part, and the other part is an RTT of a link from the satellite to the access network device, which is a common TA part. A portion of the common TA part may be compensated by the access network device, and the other portion of the common TA part may be compensated by the terminal device. The portion compensated by the terminal device will be sent to the terminal device via a system message.

In addition to broadcasting the common TA that needs to be compensated by the terminal device, the network device will also broadcast ephemeris information of the satellite to help the terminal device obtain the position of the satellite, so as to calculate the RTT from the terminal device to the satellite. Due to mobility of the satellite, the common TA and the ephemeris information change, so the ephemeris information and the common TA broadcast in the system message have a validity duration, which is called uplink (UL) synchronization validity duration. The ephemeris information and the common TA share one UL synchronization validity duration. A value of the UL synchronization validity duration is broadcast by the network device to the terminal device via an SIB.

The terminal device initiates an UL synchronization validity timer according to an epoch time (starting effective time) corresponding to the ephemeris information and the common TA in the broadcast message.

The epoch time has three indication methods:
1. A system message explicit indication: a system frame number (SFN) and a subframe number are explicitly broadcast in the system message to indicate the epoch time.
2. A system message implicit indication: an end position of a system information (SI) window of an SI including the ephemeris information and the common TA information is used as the epoch time.
3. A dedicated signaling indication: the network device provides the SFN and the subframe number to the terminal device via a dedicated signaling to indicate the epoch time.

An IOT terminal device includes at least one of: a bandwidth reduction and low complexity UE (BL UE), UE in coverage enhancement mode (UE in CE mode), narrow band internet of things UE (NB-IOT UE).

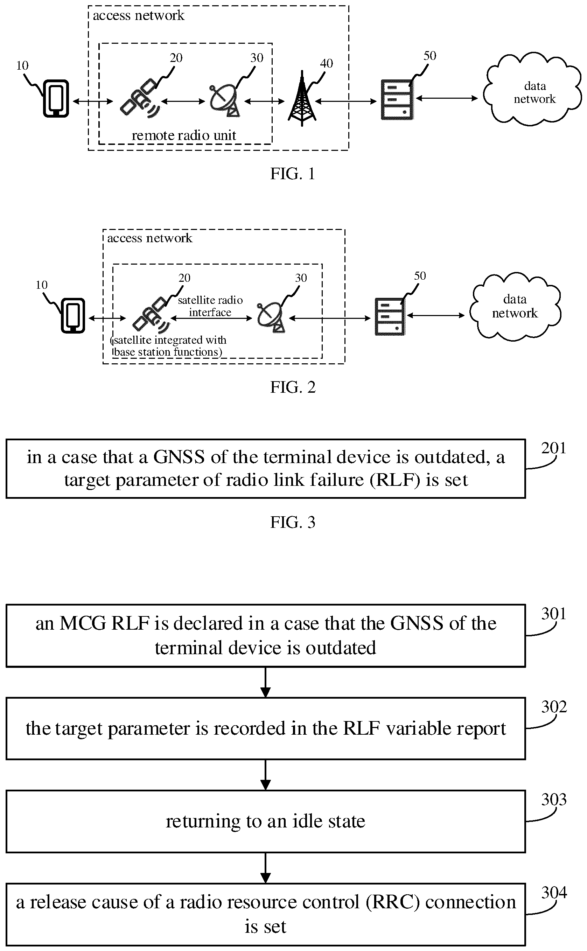

Embodiments of the present disclosure are applicable in an NTN system, as shown in FIG. 1 and FIG. 2.

Please refer to FIG. 1, which shows a schematic diagram of an NTN system, a communication satellite is a transparent payload satellite. As shown in FIG. 1, the NTN system includes: a terminal device 10, a satellite 20 , an NTN gateway 30, an access network device 40 and a core network device 50.

Communication between the terminal device 10 and the access network device 40 can be performed through an air interface (such as a Uu interface). In the architecture shown in FIG. 1, the access network device 40 can be deployed on the ground, and uplink and downlink communication between the terminal device 10 and the access network device 40 can be relayed and transmitted through the satellite 20 and the NTN gateway 30 (usually located on the ground). Taking uplink transmission as an example, the terminal device 10 sends an uplink signal to the satellite 20, and the satellite 20 forwards the uplink signal to the NTN gateway 30, and then the NTN gateway 30 forwards the uplink signal to the access network device 40, then the access network device 40 sends the uplink signal to the core network device 50. Taking downlink transmission as an example, a downlink signal from the core network device 50 is sent to the access network device 40, the access network device 40 sends the downlink signal to the NTN gateway 30, the NTN gateway 30 forwards the downlink signal to the satellite 20, and then the satellite 20 forwards the downlink signal to the terminal device 10.

In the NTN system, the satellite 20 has functions of frequency conversion and signal amplification, and the satellite 20 does not demodulate the signal of the access network device 40, and the satellite 20 is similar to a repeater.

Please refer to FIG. 2, which shows a schematic diagram of another NTN system, a communication satellites in the NTN system is a regenerative payload satellite. As shown in FIG. 2, the NTN system includes: a terminal device 10, a satellite 20, an NTN gateway 30, and a core network device 50.

In the architecture shown in FIG. 2, the function of the access network device 40 is integrated to the satellite 20, that is, the satellite 20 has the function of the access network device 40. Communication between the terminal device 10 and the satellite 20 can be performed through an air interface (such as a Uu interface). The satellite 20 and the NTN gateway 30 (usually located on the ground) can communicate through a satellite radio interface (SRI). In the NTN system, the satellite receives a signal, demodulates and decodes it, re-encodes and modulates it, and sends the regenerated signal through a satellite frequency band.

In the architecture shown in FIG. 2, taking uplink transmission as an example, the terminal device 10 sends an uplink signal to the satellite 20, and the satellite 20 forwards the uplink signal to the NTN gateway 30, and then the NTN gateway 30 sends the uplink signal to the core network device 50. Taking downlink transmission as an example, a downlink signal from a core network device 50 is sent to the NTN gateway 30, the NTN gateway 30 forwards the downlink signal to the satellite 20, and then the satellite 20 forwards the downlink signal to the terminal device 10.

In the above network architectures shown in FIGS. 1 and 2, the access network device 40 is a device for providing a wireless communication service for the terminal device 10. A connection can be established between the access network device 40 and the terminal device 10, so as to perform communication through the connection, including signaling and data interaction. The number of the access network devices 40 may be multiple, and two adjacent access network devices 40 may also communicate in a wired or wireless manner between them. The terminal device 10 may switch among the different access network devices 40, that is, establish connections with different access network devices 40.

Taking a cellular communication network as an example, the access network device 40 in the cellular communication network may be a base station. The base station is a device deployed in an access network to provide a wireless communication function for the terminal device 10. The base station may include various forms of macro base stations, micro base stations, relay stations, access points and so on. In systems using different radio access technologies, names of the device with the base station function may be different, for example, in a 5G NR system, it is called gNodeB or gNB. The name "base station" may change as communication technology evolves. For convenience of description, in the embodiments of the present disclosure, the above-mentioned devices that provide the wireless communication function for the terminal device 10 are collectively referred to as base stations or access network devices.

In addition, the terminal device 10 involved in the embodiments of the present disclosure may include various handheld devices, vehicle-mounted devices, wearable devices, computing devices with the wireless communication function, or other processing devices connected to a wireless modem, as well as various forms of a user equipment (UE), a mobile station (MS), a terminal device, and so on. For convenience of description, in the embodiments of the present disclosure, the above-mentioned devices are collectively referred to as terminal device. In the embodiments of the present disclosure, "UE" is used in some places to represent "terminal device". In the embodiments of the present disclosure, the "network device" may be an access network device (such as a base station) or a satellite.

In addition, taking a 5G NTN system as an example, the NTN system may include multiple satellites 20. One satellite 20 may cover a certain ground area, and provide a wireless communication service for the terminal device 10 on the ground area. In addition, the satellite 20 can orbit the earth, and by arranging the multiple satellites 20, communication coverage of different areas of the earth surface can be achieved.

In addition, in the embodiments of the present disclosure, the terms "network" and "system" are often used interchangeably, but those skilled in the art can understand their meanings. The technical solution described in the embodiments of the present disclosure may be applicable to a long term evolution (LTE) system, a 5G system, or an evolution system subsequent to the 5G NR system or other communication systems, which is not limited in the present disclosure.

Exemplarily, an embodiment of the present disclosure provides a processing manner of a terminal device after a GNSS is outdated.

Please refer to FIG. 3, which shows a flowchart of a method for processing GNSS validity provided by an embodiment of the present disclosure. This embodiment is described by taking the method applied to a terminal device in the communication system shown in FIG. 1 or FIG. 2 as an example. The method may include the following step.

Step 201: in a case that a GNSS of the terminal device is outdated, a target parameter of radio link failure (RLF) is set.

Exemplarily, before step 201, the terminal device may obtain a GNSS position fix, and the GNSS position fix has a validity duration. In a case that the GNSS position fix validity duration ends, the GNSS is determined as outdated. That is, the GNSS being outdated means that the GNSS position fix exceeds the GNSS validity duration.

It should be understood that the GNSS position fix validity duration may be pre-configured by a GNSS system or stipulated in a protocol, which is not limited in the present disclosure. Exemplarily, the terminal device obtains the GNSS validity duration from a global positioning system (GPS) module of the terminal device.

After the GNSS is outdated, the terminal device determines an RLF, executes an RLF processing procedure, and records a relevant parameter (the target parameter) of the RLF according to the GNSS being outdated.

Exemplarily, in a case that the GNSS of the terminal device is outdated, the terminal device may perform at least one of: declaring a master cell group (MCG) RLF, or recording the target parameter in an RLF variable report (VarRLF-Report).

The target parameter in the RLF variable report includes at least one of a connection failure type or an RLF cause. Exemplarily, the terminal device sets the connection failure type to RLF, and/or sets the RLF cause to GNSS outdated.

Exemplarily, after the GNSS of the terminal device is outdated, the terminal device needs to re-obtain a GNSS position fix. At this time, since some terminal devices do not support GNSS reception and LTE transmission and reception at the same time, the embodiment of the present disclosure provides a method that, after the GNSS is outdated, the terminal device declares the RLF, and stops uplink transmission and downlink reception until it obtains a new GNSS position fix.

To sum up, the technical solution provided by the embodiment proposes a solution for the GNSS being outdated. After the GNSS is outdated, the RLF is used to record the relevant information, which improves the processing mechanism related to the GNSS validity.

Exemplarily, after the GNSS is outdated, the terminal device may return to an idle state.

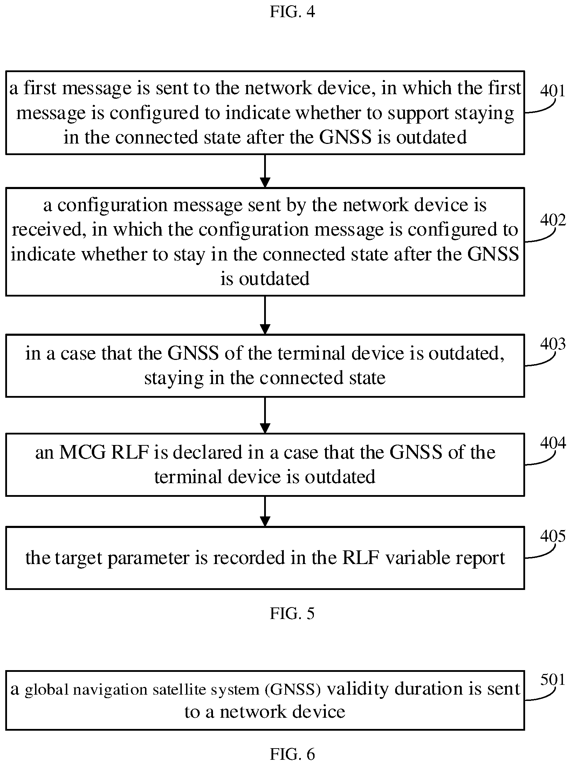

Please refer to FIG. 4, which shows a flowchart of a method for processing GNSS validity provided by an embodiment of the present disclosure. This embodiment is described by taking the method applied to a terminal device in the communication system shown in FIG. 1 or FIG. 2 as an example. The method may include the following steps.

Step 301: an MCG RLF is declared in a case that the GNSS of the terminal device is outdated.

Optionally, after the GNSS of the terminal device is outdated, the terminal device declares the MCG RLF to trigger the MCG RLF processing procedure.

Step 302: the target parameter is recorded in the RLF variable report.

Optionally, the terminal device records RLF related information in the RLF variable report (VarRLF-Report), for example, sets the connection failure type to RLF in the RLF variable report; and sets an RLF cause to GNSS outdated in the RLF variable report.

Step 303: returning to an idle state.

When access stratum (AS) security is activated or not activated, the terminal device performs a procedure of leaving a connected state, and returns from the connected state to the idle state.

That is, in a case that the access stratum security of the terminal device is not activated, the terminal device returns to the idle state; or, in a case that the access stratum security is activated, the terminal device returns to the idle state.

Step 304: a release cause of a radio resource control (RRC) connection is set.

The terminal device sets the release cause to other, or GNSS outdated, or RRC connection failure. That is, the release cause of the RRC connection is set to other; or, the release cause of the RRC connection is set to GNSS outdated; or the release cause of the RRC connection is set to RRC connection failure.

Exemplarily, the sequence of step 301, step 302, step 303, and step 304 may be arbitrary. That is, after the GNSS is outdated, the terminal device may first declare the RLF and then return to the idle state; or after the GNSS is outdated, the terminal device may return to the idle state and then declare the RLF. This is not limited in embodiments of the present disclosure.

Exemplarily, after the GNSS is outdated, the terminal device declares the RLF and sets the target parameter of the RLF; and returns to the idle state. Alternatively, after the GNSS is outdated, the terminal device returns to the idle state; and declares the RLF and sets the target parameter of the RLF.

It should be understood that the above steps may be implemented alone after the GNSS is outdated, or may be implemented in combination with other steps, and the sequence of performing the steps may be adjusted as needed.

In summary, the technical solution provided by this embodiment, after the GNSS is outdated, the RLF is declared and the relevant information is recorded, the terminal device is controlled to return from the connected state to the idle state, and the release cause of the RRC connection is set according to the GNSS outdated, which improves the processing mechanism related to the GNSS validity.

Exemplarily, after the GNSS is outdated, the terminal device may stay in a connected state.

Please refer to FIG. 5, which shows a flowchart of a method for processing GNSS validity provided by an embodiment of the present disclosure. This embodiment is described by taking the method applied to a terminal device in the communication system shown in FIG. 1 or FIG. 2 as an example. The method may include the following steps.

Step 401: a first message is sent to the network device, in which the first message is configured to indicate whether to support staying in the connected state after the GNSS is outdated.

Exemplarily, the first message is configured to indicate that the terminal device supports staying in the connected state in a case that the GNSS is outdated, or the first message is configured to indicate that the terminal device does not support staying in the connected state in a case that the GNSS is outdated.

Optionally, the terminal device reports whether it has an ability to stay in the connected state after the GNSS is outdated.

Exemplarily, the network device is an access network device.

Step 402: a configuration message sent by the network device is received, in which the configuration message is configured to indicate whether to stay in the connected state after the GNSS is outdated.

Exemplarily, the configuration message is configured to configure the terminal device to return to the idle state in a case that the GNSS is outdated, or the configuration message is configured to configure the terminal device to stay in the connected state in a case that the GNSS is outdated.

Optionally, the network device may configure the terminal device to return to the idle state or to stay in the connected state after GNSS is outdated.

Exemplarily, in a case that the terminal device supports staying in the connected state after the GNSS is outdated, the network device configures the terminal device to stay in the connected state in a case that the GNSS is outdated, or the network device configures the terminal device to return to the idle state in a case that the GNSS is outdated. In a case that the terminal device does not support staying in the connected state after the GNSS is outdated, the network device configures the terminal device to return to the idle state in a case that the GNSS is outdated.

In a case that the network device configures the terminal device to stay in the connected state after the GNSS is outdated, steps 403 to 405 are performed. In a case that the network device configures the terminal device to return to the idle state after the GNSS is outdated, steps 301 to 304 are performed.

Step 403: in a case that the GNSS of the terminal device is outdated, staying in the connected state.

The network device configures the terminal device to stay in the connected state after the GNSS is outdated, and in a case that the GNSS is outdated, the terminal device stays in the connected state.

Step 404: an MCG RLF is declared in a case that the GNSS of the terminal device is outdated.

Optionally, after the GNSS of the terminal device is outdated, the terminal device declares the MCG RLF to trigger an MCG RLF processing procedure.

Step 405: the target parameter is recorded in the RLF variable report.

Optionally, the terminal device records RLF related information in the RLF variable report (VarRLF-Report), for example, sets a connection failure type to RLF in the RLF variable report; and set an RLF cause to GNSS outdated in the RLF variable report.

Exemplarily, the sequence of declaring the RLF and staying in the connected state may be arbitrary. That is, after the GNSS is outdated, the terminal device may first declare the RLF, and then stay in the connected state; or after the GNSS is outdated, the terminal device may first stay in the connected state, and then declare the RLF. This is not limited in embodiments of the present disclosure.

Exemplarily, after the GNSS is outdated, the terminal device declares the RLF, sets the target parameter of the RLF, and stays in the connected state. Alternatively, after the GNSS is outdated, the terminal device stays in the connected state; and declare the RLF and sets the target parameter of the RLF.

It should be understood that the above steps may be implemented alone after the GNSS is outdated, or may be implemented in combination with other steps, and the sequence of performing the steps may be adjusted as needed.

To sum up, in the technical solution provided by the embodiment, the terminal device can report to the network device whether it supports staying in the connected state after the GNSS is outdated, when the terminal device supports staying in the connected state, and the network device instructs the terminal device to stay in the connected state, then after the GNSS is outdated, the terminal device can stay in the connected state, declare the RLF and record the relevant information, which improve the processing mechanism related to the GNSS validity.

Exemplarily, after the GNSS is outdated, the terminal device declares the RLF and switches or maintains the state. Then, in a case that the GNSS is outdated and the terminal device does not obtain the latest GNSS position fix, the terminal device is prohibited from performing uplink transmission. That is, in a case that the GNSS of the terminal device is outdated, the terminal device is prohibited from performing the uplink transmission.

Optionally, the terminal device does not perform downlink reception either, that is, the terminal device no longer monitors a physical downlink control channel (PDCCH), and no longer performs downlink reception. That is, in a case that the GNSS of the terminal device is outdated, the terminal device does not monitor the PDCCH; or, in a case that the GNSS of the terminal device is outdated, no downlink reception is performed.

Then, the embodiment of the present disclosure provides the following two processing manners.

Manner 1: the terminal device may perform subsequent processing according to an uplink out-of-synchronization.

Manner 2: the network device may configure a time window for the terminal device, and the terminal device obtains a new GNSS position fix within the time window, and does not perform uplink transmission and downlink reception within the time window.

For the above manner 1, the terminal device prohibits the uplink transmission before obtaining the latest GNSS position fix. Optionally, the terminal device no longer monitors the PDCCH, and no longer performs downlink reception.

For not performing the uplink transmission, the embodiment of the present disclosure provides the following three processing modes:
Mode 1) A media access control (MAC) layer of the terminal device considers that a time alignment timer is outdated. The action of the MAC layer is processed according to the process after the time alignment timer is outdated. In this way, the terminal device will not initiate random access until it obtains the latest GNSS position fix.

That is, the terminal device includes the MAC layer. In a case that the GNSS of the terminal device is outdated, the MAC layer determines that the time alignment timer is outdated; and performs a time alignment timer outdated processing procedure. In a case that the GNSS of the terminal device is outdated, the terminal device is prohibited from initiating random access.

The time alignment timer outdated includes considering that all the time alignment timers (including respective time alignment timers of a primary timing advance group (pTAG) and a secondary timing advance group (sTAG) are outdated, or considering that the time alignment timer of the pTAG is outdated.

That is, the MAC layer determines that both time alignment timers of the pTAG and the sTAG are outdated; or determines that the time alignment timer of the pTAG is outdated.

Mode 2) The terminal device includes a MAC layer and a physical (PHY) layer. The MAC layer/PHY layer of the terminal device temporarily prohibits any uplink transmission.

That is, in a case that the GNSS of the terminal device is outdated, the MAC layer or the PHY layer prohibits the uplink transmission.

Mode 3) The terminal device includes an RRC layer and a MAC layer. The actions of the RRC layer and the MAC layer are respectively defined as follows.

### RRC layer:

After the GNSS is outdated, the RRC layer optionally performs at least one of the following actions 1) to 3).

Action 1): the RRC layer releases or disables a physical uplink control channel (PUCCH)/a short PUCCH (SPUCCH) of all serving cells.

That is, in a case that the GNSS of the terminal device is outdated, the RRC layer releases or disables at least one of the PUCCH and the SPUCCH of the serving cell.

Action 2): the RRC layer releases or disables a semi-persistent scheduling (SPS) of all serving cells.

That is, in a case that the GNSS timeout of the terminal device is outdated, the RRC layer releases or disables the SPS of the serving cell.

Action 3): for an NB-IOT terminal device, the RRC layer releases or disables all dedicated scheduling request (SR) resources.

That is, in a case that the GNSS of the terminal device is outdated and the terminal device is the NB-IOT device, the RRC layer releases or disables the dedicated SR resource.

After obtaining the latest GNSS position fix, the RRC layer optionally performs at least one of the following actions 4) to 6).

Action 4): the RRC layer restores the PUCCH/SPUCCH of all disabled serving cells.

Exemplarily, in a case that the GNSS is outdated, the RRC layer releases or disables at least one of the PUCCH and SPUCCH of the serving cell. Then, in a case that the GNSS position fix is obtained, the RRC layer restores the PUCCH or SPUCCH of the disabled serving cell.

Action 5): the RRC layer restores the SPS of all disabled serving cells.

Exemplarily, in a case that the GNSS of the terminal device is outdated, the RRC layer releases or disables the SPS of the serving cell. Then, in a case that the GNSS position fix is obtained, the RRC layer restores the SPS of the disabled serving cell.

Action 6): for the NB-IOT terminal device, the RRC layer restores all disabled dedicated SR resources.

Exemplarily, in a case that the GNSS of the terminal device is outdated and the terminal device is the NB-IOT device, the RRC layer releases or disables the dedicated SR resource. Then, in a case that the GNSS position fix is obtained and the terminal device is the NB-IOT device, the RRC layer restores the disabled dedicated SR resource.

### MAC layer:

After the GNSS is outdated, the MAC layer optionally performs at least one of the following actions 7) to 12).

Action 7): the MAC layer clears a hybrid automatic repeat request (HARQ) buffer of all serving cells.

That is, in a case that the GNSS of the terminal device is outdated, the MAC layer clears the HARQ buffer of the server cell.

Action 8): the MAC layer notifies an RRC layer to release/disable a PUCCH resource of all serving cells.

That is, in a case that the GNSS of the terminal device is outdated, the MAC layer notifies the RRC layer to release or disable the PUCCH resource of the serving cell.

Action 9): the MAC layer notifies the RRC layer to release/disable a sounding reference signal (SRS) resource of all serving cells.

That is, in a case that the GNSS of the terminal device is outdated, the MAC layer notifies the RRC layer to release or disable the SRS resource of the serving cell.

Action 10): the MAC layer clears or disables all configured downlink assignments and uplink grants.

That is, in a case that the GNSS of the end device is outdated, the MAC layer clears or disables the configured downlink tasks and uplink grants.

Action 11): the MAC layer clears/disables a physical uplink shared channel (PUSCH) resource reported by semi-persistent channel state information (CSI).

That is, in a case that the GNSS of the terminal device is outdated, the MAC layer clears or disables the PUSCH resource reported by the CSI.

Action 12): the UE MAC layer temporarily prohibits any uplink transmission.

That is, in a case that the GNSS of the terminal device is outdated, the MAC layer prohibits the uplink transmission.

After obtaining the latest GNSS position fix, the MAC layer restores the disabled configured downlink assignments and uplink grants.

Exemplarily, in a case that the GNSS of the terminal device is outdated, the MAC layer clears or disables the configured downlink assignments and uplink grants. Then, in a case of obtaining the GNSS position fix, the MAC layer restores the disabled configured downlink assignments and uplink grants.

Exemplarily, the terminal device restores the uplink transmission and the downlink reception after obtaining the latest GNSS position fix. Optionally, after obtaining the latest GNSS position fix, the terminal device triggers reporting of the GNSS validity duration, or triggers random access, or triggers connection reestablishment. After the connection is established, the terminal device optionally reports the MCG RLF.

Optionally, the terminal device restores the uplink transmission in a case of obtaining the GNSS position fix.

Optionally, if the terminal device stops the downlink reception in a case that the GNSS is outdated, the terminal device restores the downlink reception in a case of obtaining the GNSS position fix.

Optionally, if the terminal device returns to the idle state in a case that the GNSS is outdated, the terminal device performs a random access procedure in a case of obtaining the GNSS position fix.

Optionally, if the terminal device returns to the idle state in a case that the GNSS is outdated, the terminal device performs a connection reestablishment procedure in a case of obtaining the GNSS position fix.

Optionally, in a case that the terminal device obtains the GNSS position fix, it sends the GNSS validity duration to the network device.

Optionally, the terminal device reports the MAC RLF to the network device in a case of obtaining the GNSS position fix. Exemplarily, the terminal device sends the RLF variable report to the network device.

For the above manner 2, the terminal device receives configuration information of the time window sent by the network device, and in response to the configuration information, does not perform LTE/new radio (NR) uplink transmission or downlink reception within the time window. The terminal device obtains the GNSS position fix within the time window.

For the manner 2, the network device may issue a time window such as a measurement gap, and the terminal device does not perform NR/LTE uplink transmission or downlink reception within the measurement gap, and the terminal device may obtain the GNSS position fix during the measurement gap.

Exemplarily, the network device pre-configures the time window for the terminal device according to the GNSS validity duration. Exemplarily, a start time of the time window is earlier than the outdated time of the GNSS validity duration. The terminal device does not perform uplink transmission or downlink reception within the time window, and obtains the GNSS position fix within the time window. Before the end of the time window, the terminal device obtains the latest GNSS position fix. Then except the time window, the GNSS position fix of the terminal device is always within the validity duration.

Exemplarily, an embodiment of the present disclosure provides a method for reporting by a terminal device a GNSS validity duration to a network device.

Please refer to FIG. 6, which shows a flowchart of a method for processing GNSS validity provided by an embodiment of the present disclosure. This embodiment is described by taking the method applied to a terminal device in the communication system shown in FIG. 1 or FIG. 2 as an example. The method may include the following step.

Step 501: a GNSS validity duration is sent to a network device.

Exemplarily, the terminal device obtains a GNSS position fix and a GNSS validity duration of the GNSS position fix. The GNSS validity duration is obtained by the terminal device in a manner pre-configured by the GNSS system. Exemplarily, the terminal device obtains the GNSS validity duration from a GPS module of the terminal device.

Exemplarily, the embodiment of the present disclosure respectively provides multiple trigger conditions, report content and report manners for the terminal device to report the GNSS validity duration. The multiple trigger conditions, reporting content and reporting manners can be combined arbitrarily.

Exemplarily, for the trigger conditions for the terminal device to report the GNSS validity duration, the embodiment of the present disclosure provides the following two conditions.

1) After the terminal device obtains the latest GNSS position fix, it triggers reporting of the GNSS validity duration.

Exemplarily, in a case that the terminal device obtains the GNSS position fix, it sends the GNSS validity duration to the network device.

2) The network device instructs the terminal device whether to report the GNSS validity duration via a system message and/or an RRC dedicated message. The terminal device reports the GNSS validity duration after receiving an instruction from the network device.

Exemplarily, the terminal device receives a first instruction sent by the network device via a system message; and/or, the terminal device receives a first instruction sent by the network device via a radio resource control (RRC) dedicated message; in which the first instruction is configured to instruct the terminal device to report the GNSS validity duration, or, the first instruction is configured to instruct the terminal device not to report the GNSS validity duration. The terminal device sends the GNSS validity duration to the network device in response to the first instruction instructing the terminal device to report the GNSS validity duration.

Exemplarily, for the reporting manners of the GNSS validity duration reported by the terminal device, the embodiment of the present disclosure provides the following two manners.
1) The terminal device reports in msg5 of random access.

Exemplarily, the terminal device sends a random access message (msg5) to the network device, and the random access message includes the GNSS validity duration.

Specifically, the GNSS validity duration may be carried in the connection establishment complete/connection restoration complete/connection reestablishment complete message.

That is, the terminal device sends a connection establishment complete message/connection restoration complete message/connection reestablishment complete message to the network device, and the connection establishment complete message/connection restoration complete message/connection reestablishment complete message includes the GNSS validity duration.

2) After the terminal device enters the connected state, it reports via a dedicated RRC message.

Specifically, the terminal device may report the GNSS validity duration via a terminal device auxiliary information message. Alternatively, after the network device requests the terminal device to report the GNSS validity duration in a terminal device information request, the terminal device reports the GNSS validity duration via a terminal device information response message.

Exemplarily, the terminal device sends the dedicated RRC message to the network device, and the dedicated RRC message includes the GNSS validity duration.

For example, the terminal device receives the terminal device information request sent by the network device, and the terminal device information request is configured to request the terminal device to report the GNSS validity duration; the terminal device sends the terminal device information response to the network device in response to the terminal device information request, and the terminal device information response includes the GNSS validity duration.

Exemplarily, for the reporting content of the GNSS validity duration reported by the terminal device, the embodiment of the present disclosure provides the following two content.
1) If the GNSS validity duration is less than a validity duration of ephemeris information/common TA, the GNSS validity duration is reported. The validity duration of the ephemeris information/common TA refers to a remaining validity duration of the ephemeris information/common TA.

Exemplarily, the terminal device sends the GNSS validity duration to the network device in a case that the GNSS validity duration is less than the first validity duration; in which the first validity duration is the validity duration of the ephemeris information or the common time alignment. Exemplarily, the first validity duration is the remaining validity duration of the validity duration of the ephemeris information or the common time alignment.

2) The terminal device reports the minimum of the GNSS validity duration and a validity duration of ephemeris information/common TA.

Exemplarily, the terminal device sends a second validity duration to the network device, and the second validity duration is a smaller value of the GNSS validity duration and a first validity duration; in which, the first validity duration is a validity duration of ephemeris information or common time alignment. Exemplarily, the first validity duration is the remaining validity duration of the validity duration of the ephemeris information or common time alignment.

To sum up, the technical solution provided by this embodiment provides a solution for GNSS validity duration reporting. There are provided multiple trigger conditions, reporting manners, and reporting content for the terminal device to report the GNSS validity duration, which improves the processing mechanism related to the GNSS validity.

It should be understood that, in response to the terminal device reporting the GNSS validity duration to the network device as described above, after the validity duration expires, the action of the terminal device and subsequent processing methods have been described in detail in the foregoing embodiments, and will not be repeated here.

The following are apparatus embodiments of the present disclosure, which can be used to implement the method embodiments of the present disclosure. For details not disclosed in the apparatus embodiments of the present disclosure, please refer to the method embodiments of the present disclosure.

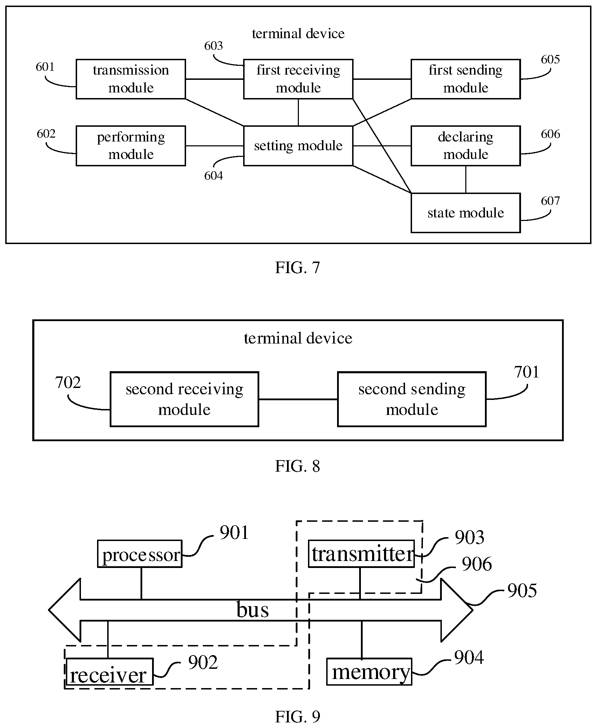

Please refer to FIG. 7, which shows a block diagram of an apparatus for processing GNSS validity provided by an embodiment of the present disclosure. The apparatus has functions of implementing the above method example of the terminal device side, and the functions may be implemented by hardware, or may be implemented by executing corresponding software on the hardware. The apparatus may be the terminal device described above, or may be set in the terminal device. As shown in Figure 7, the apparatus may include:
a setting module 604, configured to set a target parameter of radio link failure (RLF) in a case that a GNSS of the terminal device is outdated.

In an optional embodiment, the apparatus further includes:
a declaring module 606, configured to declare a main cell group (MCG) RLF in a case that the GNSS of the terminal device is outdated.

The setting module 604 is configured to record the target parameters in a RLF variable report.

In an optional embodiment, the setting module 604 is configured to set a connection failure type to RLF;
and/or,
the setting module 604 is configured to set the RLF cause to GNSS outdated.

In an optional embodiment, the apparatus further includes:
a state module 607, configured to return to an idle state in a case that access stratum security is not activated;
   or,
a state module 607, configured to return to an idle state in a case that access stratum security is activated.

In an optional embodiment, the setting module 604 is configured to set a release cause of a radio resource control (RRC) connection to other;
or,
the setting module 604 is configured to set a release cause of an RRC connection to GNSS outdated;
   or,
the setting module 604 is configured to set a release cause of an RRC connection to RRC connection failure.

In an optional embodiment, the apparatus further includes:
a state module 607, configured to stay in a connected state.

In an optional embodiment, the apparatus further includes:
a first receiving module 603, configured to receive a configuration message sent by a network device; in which
the configuration message is configured to configure the terminal device to return to the idle state in a case that the GNSS is outdated; or
the configuration message is configured to configure the terminal device to stay in the connected state in a case that the GNSS is outdated.

In an optional embodiment, the apparatus further includes:
a first sending module 605, configured to send a first message to the network device, in which
the first message is configured to indicate that the terminal device supports staying in the connected state in a case that the GNSS is outdated; or
the first message is configured to indicate that the terminal device does not support staying in the connected state in a case that the GNSS is outdated.

In an optional embodiment, the apparatus further includes:
a transmission module 601, configured to prohibit uplink transmission in a case that the GNSS of the terminal device is outdated.

In an optional embodiment, the apparatus further includes:
a transmission module 601, configured to not monitor a physical downlink control channel (PDCCH) in a case that the GNSS of the terminal device is outdated; or
a transmission module 601, configured to not perform downlink reception in a case that the GNSS of the terminal device is outdated.

In an optional embodiment, the terminal device includes a media access control (MAC) layer;
the transmission module 601 is configured to determine a time alignment timer to be outdated in a case that the GNSS of the terminal device is outdated; and
the transmission module 601 is configured to perform a time alignment timer outdated processing procedure.

In an optional embodiment, the transmission module 601 is configured to determine that both time alignment timers of a primary timing advance group (pTAG) and a secondary timing advance group (sTAG) are outdated; or
the transmission module 601 is configured to determine that a time alignment timer of a pTAG is outdated.

In an optional embodiment, the apparatus further includes:
a transmission module 601, configured to prohibit initiating random access in a case that the GNSS of the terminal device is outdated.

In an optional embodiment, the terminal device includes a media access control (MAC) layer and a physical (PHY) layer.

In an optional embodiment, the terminal device includes a radio resource control (RRC) layer;
the transmission module 601 is configured to release or disable at least one of a physical uplink control channel (PUCCH) or a short physical uplink control channel (SPUCCH) of a serving cell in a case that the GNSS of the terminal device is outdated;
the transmission module 601 is configured to release or disable a semi-persistent scheduling (SPS) of a serving cell, in a case that the GNSS of the terminal device is outdated; or
the transmission module 601 is configured to release or disable a dedicated scheduling request (SR) resource, in a case that the GNSS of the terminal device is outdated and the terminal device is a narrow band internet of things (NB-IOT) device.

In an optional embodiment, the transmission module 601 is configured to restore the PUCCH or SPUCCH of the disabled serving cell in a case of obtaining a GNSS position fix;
the transmission module 601 is configured to restore the SPS of the disabled serving cell in a case of obtaining a GNSS position fix; or
the transmission module 601 is configured to restore the disabled dedicated SR resource in a case that a GNSS position fix is obtained and the terminal device is an NB-IOT device.

In an optional embodiment, the terminal device includes a media access control (MAC) layer;
the transmission module 601 is configured to clear a HARQ buffer of a serving cell in a case that the GNSS of the terminal device is outdated;
the transmission module 601 is configured to notify a radio resource control (RRC) layer to release or disable a sounding reference signal (SRS) resources of a serving cell in a case that the GNSS of the terminal device is outdated;
the transmission module 601 is configured to clear or disable configured downlink assignments and uplink grants in a case that the GNSS of the terminal device is outdated;
the transmission module 601 is configured to clear or disable a physical uplink shared channel (PUSCH) resource reported by semi-persistent channel state information (CSI) in a case that the GNSS of the terminal device is outdated; or
the transmission module 601 is configured to prohibit the uplink transmission in a case that the GNSS of the terminal device is outdated.

In an optional embodiment, the transmission module 601 is configured to restore the disabled configured downlink assignments and uplink grants in a case of obtaining a GNSS position fix.

In an optional embodiment, the transmission module 601 is configured to restore the uplink transmission in a case of obtaining a GNSS position fix.

In an optional embodiment, the transmission module 601 is configured to restore the downlink reception in a case of obtaining a GNSS position fix.

In an optional embodiment, the apparatus further includes:
a first sending module 605, configured to send a GNSS validity duration to a network device in a case of obtaining a GNSS position fix; or
a first sending module 605, configured to report the master cell group (MAC) RLF to a network device in a case of obtaining a GNSS position fix.

In an optional embodiment, the apparatus further includes:
a performing module 602, configured to perform a random access procedure in a case of obtaining a GNSS position fix;
a performing module 602, configured to perform a connection reestablishment procedure in a case of obtaining a GNSS position fix.

In an optional embodiment, the apparatus further includes:
a first receiving module 603, configured to obtain a GNSS position fix within a time window.

In an optional embodiment, the apparatus further includes:
a transmission module 601, configured to not perform uplink transmission or downlink reception within the time window.

In an optional embodiment, the apparatus further includes:
a first receiving module 603, configured to receive configuration information of the time window sent by the network device.

Please refer to FIG. 8 , which shows a block diagram of an apparatus for processing GNSS validity provided by an embodiment of the present disclosure. The apparatus has functions of implementing the above method examples of the terminal device side, and the functions may be implemented by hardware, or may be implemented by executing corresponding software on the hardware. The apparatus may be the terminal device described above, or may be set in the terminal device. As shown in Figure 8, the apparatus may include:
a second sending module 701, configured to send a GNSS validity duration to a network device.

In an optional embodiment, the second sending module 701 is configured to send a random access message to the network device, in which the random access message includes the GNSS validity duration.

In an optional embodiment, the second sending module 701 is configured to send a dedicated radio resource control (RRC) message to the network device, in which the dedicated RRC message includes the GNSS validity duration.

In an optional embodiment, the device also includes:
a second receiving module 702, configured to receive a terminal device information request sent by the network device, in which the terminal device information request is configured to request the terminal device to report the GNSS validity duration;
the second sending module 701 is configured to send a terminal device information response to the network device, in which the terminal device information response includes the GNSS validity duration.

In an optional embodiment, the second sending module 701 is configured to send the GNSS validity duration to the network device in a case that the GNSS validity duration is less than a first validity duration;
in which, the first validity duration is a validity duration of ephemeris information or common time alignment.

In an optional embodiment, the second sending module 701 is configured to send a second validity duration to the network device, in which the second validity duration is a smaller value of the GNSS validity duration and a first validity duration;
in which, the first validity duration is a validity duration of ephemeris information or common time alignment.

In an optional embodiment, the second sending module 701 is configured to send the GNSS validity duration to the network device in a case of obtaining a GNSS position fix.

In an optional embodiment, the apparatus further includes:
a second receiving module 702, configured to receive a first instruction sent by the network device via a system message;
   and/or,
a second receiving module 702, configured to receive a first instruction sent by the network device via a radio resource control (RRC) dedicated message;
in which, the first instruction is configured to instruct the terminal device to report the GNSS validity duration, or the first instruction is configured to instruct the terminal device not to report the GNSS validity duration.

It should be noted that, when the apparatus provided by the above embodiment realizes its functions, it only uses the division of the above-mentioned functional modules as an example for illustration. In practical applications, the above-mentioned function allocation may be completed by different functional modules according to actual needs. That is, the content structure of the apparatus is divided into different functional modules to complete all or part of the functions described above.

Regarding the apparatus in the foregoing embodiments, the specific manner in which each module executes operations has been described in detail in the embodiments related to the method, and will not be described in detail here.

Please refer to FIG. 9, which shows a schematic structural diagram of a communication device (terminal device or network device) provided by an embodiment of the present disclosure. The communication device may include: a processor 901, a receiver 902, a transmitter 903, a memory 904 and a bus 905.

The processor 901 includes one or more processing cores. The processor 901 executes various functional applications and processes GNSS validity by running software programs and modules.

The receiver 902 and the transmitter 903 may be realized as a transceiver 906, and the transceiver 906 may be a communication chip.

The memory 904 is connected to the processor 901 via the bus 905.

The memory 904 may be configured to store a computer program, and the processor 901 is configured to execute the computer program, so as to implement various steps performed by the communication device in the foregoing method embodiments.

In addition, the memory 904 may be implemented by any type of volatile or non-volatile storage device or their combination, and the volatile or non-volatile storage device includes but not limited to: a random-access memory (RAM), a read-only memory (ROM), an erasable programmable read-only memory (EPROM), an electrically erasable programmable read-only memory (EEPROM), a flash memory or other solid-state storage technologies, a compact disc read-only memory (CD-ROM), a high-density digital video disc (DVD) or other optical storage, a tape cartridge, a tape, a disks storage or other magnetic storage devices.

In a case that the communication device is implemented as a terminal device, the processor 901 involved in the embodiment of the present disclosure may execute the steps performed by the terminal device in any of the methods shown in FIGS. 3 to 6 above, which are not repeated here.

In a possible implementation, in a case that the communication device is implemented as a terminal device,
The processor is configured to set a target parameter of radio link failure (RLF) in a case that a global navigation satellite system (GNSS) of the terminal device is outdated.

In a possible implementation, in a case that the communication device is implemented as a terminal device,
The transceiver is configured to send a validity duration of a global navigation satellite system (GNSS) to a network device.

An embodiment of the present disclosure also provides a computer-readable storage medium. A computer program is stored in the storage medium, and the computer program is used to be executed by a processor of a core network device, so as to implement the above-mentioned method for processing GNSS validity on the terminal device side.

Optionally, the computer-readable storage medium may include: a read-only memory (ROM), a random-access memory (RAM), a solid-state hard disk (SSD) or an optical disk. The random access memory may include resistance random access memory (ReRAM) and dynamic random access memory (DRAM).

An embodiment of the present disclosure also provides a chip. The chip includes a programmable logic circuit and/or program instructions, and in a case that the chip is run on a terminal device, it is used to implement the above-mentioned method for processing GNSS validity on the terminal device side.

An embodiment of the present disclosure also provides a computer program product or computer program. The computer program product or computer program includes computer instructions stored in a computer-readable storage medium. A processor of the terminal device reads the computer instructions from the computer-readable storage medium and executes the computer instructions, to implement the above-mentioned method for processing GNSS validity on the terminal device side.

It should be understood that the "indication" mentioned in the embodiments of the present disclosure may be a direct indication, may also be an indirect indication, and may also mean that there is an association relationship. For example, A indicates B, which can mean that A directly indicates B, for example, B can be obtained through A; it can also indicate that A indirectly indicates B, for example, A indicates C, and B can be obtained through C; it can also indicate that there is an association relationship between A and B.

In the description of the embodiments of the present disclosure, the term "corresponding" may mean that there is a direct correspondence or indirect correspondence relationship between the two, or that there is an association relationship between the two, or a relationship of indicating and being indicated, configuring and being configured, and so on.

The "plurality" mentioned herein means two or more. "And/or" describes the association relationship of associated objects, indicating that there may be three types of relationships, for example, A and/or B may indicate: A exists alone, A and B exist simultaneously, and B exists alone. The character "/" generally indicates that the associated objects are an "or" relationship.

In addition, the numbering of the steps described herein only exemplarily shows a possible sequence for performing the steps. In some other embodiments, the above-mentioned steps may not be executed according to the order of the numbers, for example the steps with two different numbers are executed at the same time, or the steps with two different numbers are executed in an order reverse to that shown in the figures, which is not limited in embodiments of the present disclosure.

Those skilled in the art should be aware that in the above one or more examples, the functions described in the embodiments of the present disclosure may be implemented by hardware, software, firmware or any combination thereof. In a case that it is implemented in software, the functions may be stored or transmitted as one or more instructions or codes on a computer-readable medium. The computer-readable medium includes both computer storage medium and communication medium, in which the communication medium includes any medium that facilitates transfer of a computer program from one place to another. A storage medium may be any available medium that can be accessed by a general purpose or special purpose computer.

The above descriptions are only exemplary embodiments of the present disclosure, and are not intended to limit the present disclosure. Any modifications, equivalent replacements, improvements, etc., made within the spirit and principles of the present disclosure shall be included in the protection scope of the present disclosure.

## Claims

1. A method for processing GNSS validity, performed by a terminal device, comprising:
setting a target parameter of radio link failure (RLF), in a case that a global navigation satellite system (GNSS) of the terminal device is outdated.

2. The method according to claim 1, wherein setting the target parameter of the radio link failure (RLF) in a case that the global navigation satellite system (GNSS) of the terminal device is outdated comprises:
declaring a master cell group (MCG) RLF in a case that the GNSS of the terminal device is outdated; and
recording the target parameter in a RLF variable report.

3. The method according to claim 2, wherein recording the target parameter in the RLF variable report comprises at least one of:
setting a connection failure type to RLF; or
setting an RLF cause to GNSS outdated.

4. The method according to any one of claims 1 to 3, further comprising:
returning to an idle state in a case that access stratum security is not activated; or
returning to an idle state in a case that access stratum security is activated.

5. The method according to claim 4, further comprising one of:
setting a release cause of a radio resource control (RRC) connection to other;
setting a release cause of an RRC connection to GNSS outdated; or
setting a release cause of an RRC connection to RRC connection failure.

6. The method according to any one of claims 1 to 3, further comprising:
staying in a connected state.

7. The method according to any one of claims 4 to 6, further comprising:
receiving a configuration message sent by a network device, wherein
the configuration message is configured to configure the terminal device to return to the idle state in a case that the GNSS is outdated; or
the configuration message is configured to configure the terminal device to stay in the connected state in a case that the GNSS is outdated.

8. The method according to claim 7, further comprising:
sending a first message to the network device, wherein
the first message is configured to indicate that the terminal device supports staying in the connected state in a case that the GNSS is outdated; or
the first message is configured to indicate that the terminal device does not support staying in the connected state in a case that the GNSS is outdated.

9. The method according to any one of claims 1 to 3, further comprising:
prohibiting uplink transmission in a case that the GNSS of the terminal device is outdated.

10. The method according to any one of claims 1 to 3, further comprising at least one of:
not monitoring a physical downlink control channel (PDCCH), in a case that the GNSS of the terminal device is outdated; or
not performing downlink reception, in a case that the GNSS of the terminal device is outdated.

11. The method according to claim 9, wherein the terminal device comprises a media access control (MAC) layer; and
prohibiting the uplink transmission in a case that the GNSS of the terminal device is outdated comprises:
determining a time alignment timer to be outdated in a case that the GNSS of the terminal device is outdated; and
performing a time alignment timer outdated processing procedure.

12. The method according to claim 11, wherein determining the time alignment timer to be outdated comprises at least one of:
determining that both time alignment timers of a primary timing advance group (pTAG) and a secondary timing advance group (sTAG) are outdated; or
determining that a time alignment timer of a pTAG is outdated.

13. The method according to claim 11, further comprising:
prohibiting initiating random access in a case that the GNSS of the terminal device is outdated.

14. The method according to claim 9, wherein the step of prohibiting the uplink transmission is performed by a MAC layer and a physical (PHY) layer of the terminal device.

15. The method according to claim 9, wherein the terminal device comprises a radio resource control (RRC) layer, and prohibiting the uplink transmission in a case that the GNSS of the terminal device is outdated comprises at least one of:
releasing or disabling at least one of a physical uplink control channel (PUCCH) or a short physical uplink control channel (SPUCCH) of a serving cell, in a case that the GNSS of the terminal device is outdated;
releasing or disabling a semi-persistent scheduling (SPS) of a serving cell, in a case that the GNSS of the terminal device is outdated; or
releasing or disabling a dedicated scheduling request (SR) resource, in a case that the GNSS of the terminal device is outdated and the terminal device is a narrow band internet of things (NB-IOT) device.

16. The method according to claim 15, wherein further comprising at least one of:
restoring the PUCCH or the SPUCCH of the disabled serving cell in a case of obtaining a GNSS position fix;
restoring the SPS of the disabled serving cell in a case of obtaining a GNSS position fix; or
restoring the disabled dedicated SR resource in a case that a GNSS position fix is obtained and the terminal device is an NB-IOT device.

17. The method according to claim 9, wherein the terminal device comprises a medium access control (MAC) layer; and
prohibiting the uplink transmission in a case that the GNSS of the terminal device is outdated comprises at least one of:
clearing a hybrid automatic repeat request (HARQ) buffer of a serving cell in a case that the GNSS of the terminal device is outdated;
notifying a radio resource control (RRC) layer to release or disable a physical uplink control channel (PUCCH) resource of a serving cell in a case that the GNSS of the terminal device is outdated;
notifying an RRC layer to release or disable a sounding reference signal (SRS) resource of a serving cell in a case that the GNSS of the terminal device is outdated;
clearing or disabling configured downlink assignments and uplink grants in a case that the GNSS of the terminal device is outdated;
clearing or disabling a physical uplink shared channel (PUSCH) resource reported by semi-persistent channel state information (CSI) in a case that the GNSS of the terminal device is outdated; or
prohibiting the uplink transmission in a case that the GNSS of the terminal device is outdated.

18. The method according to claim 17, further comprising:
restoring the disabled configured downlink assignments and uplink grants in a case of obtaining a GNSS position fix.

19. The method according to claim 9, further comprising:
restoring the uplink transmission in a case of obtaining a GNSS position fix.

20. The method according to claim 10, further comprising:
restoring the downlink reception in a case of obtaining a GNSS position fix.

21. The method according to any one of claims 1 to 3, further comprising at least one of:
sending a GNSS validity duration to a network device in a case of obtaining a GNSS position fix; or
reporting the master cell group (MAC) RLF to a network device in a case of obtaining a GNSS position fix.

22. The method according to claim 4, further comprising at least one of:
performing a random access procedure in a case of obtaining a GNSS position fix; or
performing a connection reestablishment procedure in a case of obtaining a GNSS position fix.

23. The method according to any one of claims 1 to 3, further comprising:
obtaining a GNSS position fix within a time window.

24. The method according to claim 23, further comprising:
not performing uplink transmission or downlink reception within the time window.

25. The method according to claim 23, further comprising:
receiving configuration information of the time window sent by a network device.

26. A method for processing GNSS validity, performed by a terminal device, comprising:
sending a global navigation satellite system (GNSS) validity duration to a network device.

27. The method according to claim 26, wherein sending the GNSS validity duration to the network device comprises:
sending a random access message to the network device, wherein the random access message comprises the GNSS validity duration.

28. The method according to claim 26, wherein sending the GNSS validity duration to the network device comprises:
sending a dedicated radio resource control (RRC) message to the network device, wherein the dedicated RRC message comprises the GNSS validity duration.

29. The method according to claim 28, further comprising:
receiving a terminal device information request sent by the network device, wherein the terminal device information request is configured to request the terminal device to report the GNSS validity duration;
wherein sending the dedicated radio resource control (RRC) message to the network device comprises:
sending a terminal device information response to the network device, wherein the terminal device information response comprises the GNSS validity duration.

30. The method according to any one of claims 26 to 29, wherein sending the global navigation satellite system (GNSS) validity duration to the network device comprises:
sending the GNSS validity duration to the network device, in a case that the GNSS validity duration is less than a first validity duration;
wherein the first validity duration is a validity duration of ephemeris information or common time alignment.

31. The method according to any one of claims 26 to 29, further comprising:
sending a second validity duration to the network device, wherein the second validity duration is a smaller value of the GNSS validity duration and a first validity duration;
wherein the first validity duration is a validity duration of ephemeris information or common time alignment.

32. The method according to any one of claims 26 to 29, wherein sending the global navigation satellite system (GNSS) validity duration to the network device comprises:
sending the GNSS validity duration to the network device in a case of obtaining a GNSS position fix.

33. The method according to any one of claims 26 to 29, further comprising:
receiving a first instruction sent by the network device via a system message; and/or
receiving a first instruction sent by the network device via a radio resource control (RRC) dedicated message;
wherein the first instruction is configured to instruct the terminal device to report the GNSS validity duration, or, the first instruction is configured to instruct the terminal device not to report the GNSS validity duration.

34. An apparatus for processing GNSS validity, being used to implement a terminal device, comprising:
a setting module, configured to set a target parameter of radio link failure (RLF) in a case that a global navigation satellite system (GNSS) of the terminal device is outdated.

35. An apparatus for processing GNSS validity, being used to implement a terminal device, comprising:
a second sending module, configured to send a global navigation satellite system (GNSS) validity duration to a network device.

36. A terminal device, comprising a processor;
wherein the processor is configured to set a target parameter of radio link failure (RLF) in a case that a global navigation satellite system (GNSS) of the terminal device is outdated.

37. A terminal device, comprising a transceiver;
wherein the transceiver is configured to send a global navigation satellite system (GNSS) validity duration to a network device.

38. A computer-readable storage medium having stored thereon a computer program that, when being executed by a processor, enables the method for processing GNSS validity according to any one of claims 1 to 33 to be implemented.

39. A chip, comprising a programmable logic circuit and/or program instructions, wherein the chip, when running, implements the method for processing GNSS validity according to any one of claims 1 to 33.

40. A computer program product or computer program, comprising computer instructions stored in a computer-readable storage medium, wherein a processor reads the computer instructions from the computer-readable storage medium and executes the computer instructions, to implement the method for processing GNSS validity according to any one of claims 1 to 33.
